# EUROPEAN PATENT SPECIFICATION

(11) **EP 4 424 794 B1**
(45) Date of publication and mention of the grant of the patent: **09.07.2025**
(21) Application number: 23167452.4
(22) Date of filing: 11.04.2023
(51) Int. Cl.: C23F 3/06

(54) **A SOLUTION FOR POLISHING OF COPPER AND ITS ALLOYS AND A METHOD FOR POLISHING**
LÖSUNG ZUM POLIEREN VON KUPFER UND SEINEN LEGIERUNGEN UND VERFAHREN ZUM POLIEREN
SOLUTION DE POLISSAGE DU CUIVRE ET DE SES ALLIAGES ET PROCÉDÉ DE POLISSAGE

(30) Priority: 01.03.2023 PL 44393923
(43) Date of publication of application: 04.09.2024
(73) Proprietor: Akademia Górniczo-Hutnicza im. Stanislawa Staszica w Krakowie, 30-059 Kraków (PL)
(72) Inventor: Wojnicki, Marek, 30-128 Kraków (PL); Wojtaszek, Konrad, 32-082 Bolechowice (PL)
(74) Representative: Wlasienko, Jozef

(56) References cited:
- US-A- 4 714 517
- US-B2- 11 085 011

## Description

The invention relates to a solution for polishing of copper and its alloys and a method for polishing. The invention relates to the field of currentless polishing of copper and its alloys and has potential application in restoration of monuments, preparation of metal surfaces before galvanization and etching of a surface of samples for structure observation.

Solutions for polishing of copper and its alloys based on strong inorganic acids, such as sulfuric acid (VI) or nitric acid (V), and their mixtures are known. They show strong corrosive effect on copper and its alloys, resulting in high polishing rate, as well as difficulties in controlling the process and emission of toxic nitrogen and/or sulfur oxides. Examples of such solutions are disclosed in patent specifications, e.g. No. PL133213B1, according to which, for polishing of copper and its alloys, a solution containing concentrated sulfuric acid (VI) in an amount of 35-45% by weight, concentrated nitric acid (V) in an amount of 15-40% by weight, ammonium nitrate in an amount of 10-30% by weight and cadmium chloride (II) in an amount of 0.05-5% by weight and sodium/potassium/ammonium phosphate in an amount of 2-15% by weight should be prepared. Therefore, the proposed mixture contains also ions of toxic metal, that is cadmium, which further reduces the usefulness of the solution. In turn, the patent specifications No. PL137972B1 discloses the following composition of a solution: sulfuric acid (VI) in an amount of 45-70% by weight, ammonium nitrate in an amount of 6.1-8.0% by weight, sodium water glass in an amount of 0.05%-1% by weight and ammonium chloride in an amount of 0.01-0.3% by weight. In addition, commercial agents for cleaning of copper and its alloys having a composition reserved by the manufacturer, e.g. Argentum, are known. The patent specification No. CN102747371A discloses an agent for treating of surface of copper and its alloys, containing 15-55% of hydrogen peroxide, 10-20% of organic acid including citric and acetic acid, 10-20% of inorganic acid and 0.5-5% of a corrosion inhibitor. Sulfuric acid and hydrochloric acid are mentioned among others as preferred inorganic acid, and heterocyclic compounds, mainly benzotriazole derivatives, are mentioned as preferred corrosion inhibitors. As it results from above, it was not possible to avoid the content of compounds that are harmful to human and the environment, in the composition. US 11 085 011 describes an aqueous stripping composition for semiconductors. US 4 714 517 describes a method using aqueous composition for etching copper parts.

The object of the invention is to provide an ecological solution for polishing of copper and its alloys, having minimal harmfulness to human and the environment, while maintaining high polishing rate and quality.

The invention relates to a solution for polishing of copper and its alloys, containing citric acid in an amount of 10-15 % by weight, acetic acid in an amount of 0.1-1 % by weight, hydrogen peroxide in an amount of 0.5-2 % by weight, ethanol in an amount of 35-55 % by weight and water.
Preferably, the solution according to the invention contains citric acid in an amount of 10 % by weight, acetic acid in an amount of 1 % by weight, hydrogen peroxide in an amount of 0,5 % by weight, ethanol in an amount of 55 % by weight and water in an amount of 33.5 % by weight.
The invention also relates to a method for polishing copper and its alloys, comprising the following steps: (a) immersing of copper or its alloy in the solution according to the invention, (b) heating the solution to temperature of 50-70°C, (c) ultrasonicating the solution using an ultrasonic generator power of 300 W per 10 L of the solution, while mixing the solution.
In a preferred variant of the method according to the invention, step (c) is carried out for a time of at least 3 minutes.

A special feature of the invention is elimination of aggressive and harmful compounds from the composition, such as inorganic acids and salts of heavy metals. Instead, citric acid, acetic acid, ethyl alcohol and hydrogen peroxide in specific concentrations were used. It is possible to increase the efficiency of polishing of copper and its alloys using the solution according to the invention by increasing the temperature of the solution and use of ultrasonicating. A time necessary to remove heavy contamination is 3 minutes.

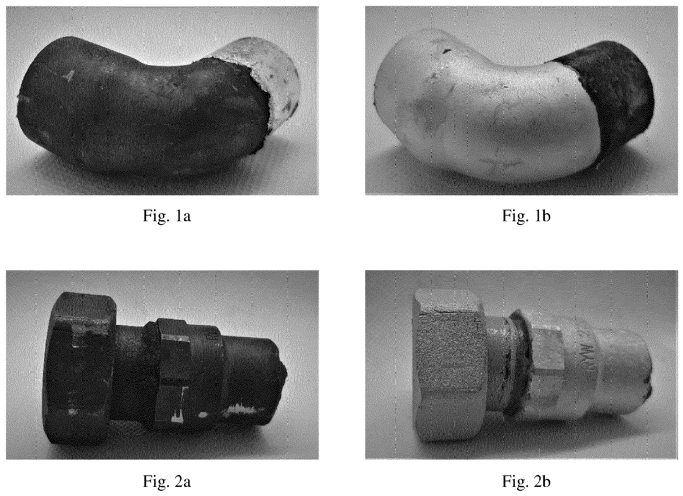

The invention has been illustrated by the following example and drawing, in which Fig. 1a and Fig. 1b show an item made of copper, respectively, before and after polishing with a solution according to the invention, and Fig. 2a and 2b show an item made of brass, respectively, before and after polishing with a solution according to the invention.
A solution with the following composition was prepared:
Component A: citric acid in an amount of 10% by weight,
Component B: acetic acid in an amount of 1% by weight,
Component C: ethanol in an amount of 55% by weight,
Component D: hydrogen peroxide in an amount of 0.5% by weight,
Component E: softened water in an amount of 33.5% by weight.
Components A-E mixed in the vessel. 10.7 L of solution was obtained. The solution was then heated to temperature of 65°C. Items made of copper and items made of brass were placed in the hot solution. Then the ultrasound source (generator) was turned on. Power of 320 W was used. The presence of ultrasound enabled mixing the preparation and mechanical removal of non-metallic impurities such as soot, oxides, greases and fats. Impurities were removed from the cleaned surfaces after 3 minutes of mixing. High polishing efficiency has been achieved with low harmfulness to human and the environment.

## Claims

1. A solution for polishing of copper and its alloys, **characterized in that**, it contains citric acid in an amount of 10-15 % by weight, acetic acid in an amount of 0.1-1 % by weight, hydrogen peroxide in an amount of 0.5-2 % by weight, ethanol in an amount of 35-55 % by weight and water.

2. The solution according to claim 1, **characterized in that**, it contains citric acid in an amount of 10 % by weight, acetic acid in an amount of 1 % by weight, hydrogen peroxide in an amount of 0,5 % by weight, ethanol in an amount of 55 % by weight and water in an amount of 33,5 % by weight.

3. A method for polishing copper or its alloys, **characterized in that**, it comprises the following steps: (a) immersing of copper or its alloy in the solution defined in claim 1, (b) heating the solution to temperature of 50-70°C, (c) ultrasonicating the solution using an ultrasonic generator power of 300 W per 10 L of the solution, while mixing the solution.

4. The method according to claim 3, **characterized in that**, step (c) is carried out for a time of at least 3 minutes.

## Patentansprüche

1. Lösung zum Polieren von Kupfer und Kupferlegierungen, **dadurch gekennzeichnet, dass** die 10 bis 15 Gew.-% Zitronensäure, 0,1 bis 1 Gew.-% Essigsäure, 0,5 bis 2 Gew.-% Wasserstoffperoxid, 35 bis 55 Gew.-% Ethanol, und Wasser enthält.

2. Die Lösung nach Anspruch 1, **dadurch gekennzeichnet, dass** die 10 Gew.-% Zitronensäure, 1 Gew.-% Essigsäure, 0,5 Gew.-% Wasserstoffperoxid, 55 Gew.-% Ethanol und 33,5 Gew.-% Wasser enthält.

3. Verfahren zum Polieren von Kupfer oder Kupferlegierungen, **dadurch gekennzeichnet, dass** es die folgenden Schritte: (a) Eintauchen des Kupfers oder der Kupferlegierung in die in Anspruch 1 definierte Lösung, (b) Erhitzen der Lösung auf eine Temperatur von 50 bis 70 °C und (c) Ultraschallbehandlung der Lösung mit einem Ultraschallgenerator mit einer Leistung von 300 W pro 10 l Lösung unter gleichzeitigem Mischen der Lösung, umfasst.

4. Verfahren nach Anspruch 3, **dadurch gekennzeichnet, dass** der Schritt (c) mindestens 3 Minuten lang durchgeführt wird.

## Revendications

1. Solution pour le polissage du cuivre et de ses alliages, **caractérisée en ce qu'**elle contient de 10 à 15 % en poids d'acide citrique, de 0,1 à 1 % en poids d'acide acétique, de 0,5 à 2 % en poids de peroxyde d'hydrogène, de 35 à 55 % en poids d'éthanol et contient de l'eau.

2. Solution selon la revendication 1, **caractérisée en ce qu'**elle contient de 10 % en poids d'acide citrique, de 1 % en poids d'acide acétique, de 0,5 % en poids de peroxyde d'hydrogène, de 55 % en poids d'éthanol et de 33,5 % en poids d'eau.

3. Procédé de polissage du cuivre ou de ses alliages, **caractérisé en ce qu'**il comprend les étapes suivantes : (a) immersion du cuivre ou de son alliage dans la solution définie dans la revendication 1, (b) chauffage de la solution à une température de 50 à 70°C, (c) traitement par ultrasons de la solution à l'aide d'un générateur d'ultrasons d'une puissance de 300 W pour 10 1 de solution, tout en mélangeant la solution.

4. Procédé selon la revendication 3, **caractérisé en ce que** l'étape (c) est réalisée pendant au moins 3 minutes.
